# EUROPEAN PATENT SPECIFICATION

(11) **EP 1 472 113 B1**
(45) Date of publication and mention of the grant of the patent: **24.10.2007**
(21) Application number: 03702070.8
(22) Date of filing: 10.01.2003
(51) Int. Cl.: B60R 9/04, B60R 9/058

(54) **RACK TOWER**
TRÄGERTURM
SUPPORT DE BATI DE CHARGEMENT

(30) Priority: 11.01.2002 US 348817 P
(43) Date of publication of application: 03.11.2004
(73) Proprietor: Yakima Products, Inc., Arcata, CA 95521 (US)
(72) Inventor: ALLEN, Scott, R., Fieldbrook, CA 95519 (US)
(74) Representative: Harrison Goddard Foote
(86) International application number: PCT/US2003/000864
(87) International publication number: WO 2003/059692

(56) References cited:
- DE-A- 3 221 126
- DE-A- 3 729 641
- US-A- 4 406 386
- US-A- 5 190 198
- US-A- 5 375 750
- US-A- 5 647 781
- US-A- 5 845 829
- US-A- 6 010 048

## Description

### Technical Field

The present invention relates to a sports equipment rack for a vehicle. More particularly, the present invention provides a rack tower configured to be attached to a vehicle roof rail.

### Background of the Invention

Sports equipment racks for vehicles typically include one or more crossbars configured to extend across a vehicle roof for supporting recreational equipment items over the roof. Typically, each crossbar is attached to the car roof via a pair of towers. The towers serve both to couple the crossbar to the vehicle, and to support the crossbars over the vehicle roof so that the crossbars do not contact the roof.

Many different types of rack towers are known, and may be configured to be attached to a vehicle roof in any of a number of different ways. For example, some rack towers are configured to be attached to vehicle roof rails. Roof rails are long, narrow, rail-shaped devices mounted to the roofs of many vehicles, often by the vehicle manufacturer. A vehicle with roof rails typically has a plurality of rails that run at least partially along the length of the roof in a parallel relation to one another. Roof rails generally include a slotted track that contains one or more mounts or connectors. These connectors are typically configured to accept a fastener, such as a bolt, to allow the attachment of items such as rack towers to the roof rail, and thus to the vehicle.

Rack towers that mount to roof rails offer some advantages over other types of towers. For example, these towers may be mounted to vehicles that lack rain gutters or other features commonly used for mounting rack towers. Also, these towers typically are supported completely by the roof rails, and do not otherwise touch the vehicle roof.

However, known rack towers for mounting to a roof rail may also present some shortcomings. For example, these towers are typically configured to remain at a fixed angle to the roof once the tower is adjusted for a particular roof. In this situation, a user may need to exercise care when mounting or removing the rack from the vehicle roof to avoid damaging the roof rails by lifting one tower while the other is attached to the vehicle. Also, the bolts used to mount the towers to the fasteners inside the rail slots are typically not accessible when the tower portion is mounted to the base portion. In this case, the tower portions typically must be removed from the base portions to adjust the position of the rack on the vehicle roof.

Additionally, the hardware used to tighten the tower onto a crossbar is often located in a position that may be difficult to adjust once the tower portion is mounted to the base. Furthermore, this hardware may be exposed to highway dirt or dust, which may clog the hardware and make the tower more difficult to adjust. US6,010,048 (Settelmayer) discloses a roof rack, according to the preamble of claim 1, with quick release tower assembly comprising a base portion for attachment to a vehicle and a tower portion having a holding mechanism for securing a portion of a crossbar. A quick release mechanism allows a user to selectively lock and release the tower body in place on the base by means of a pivoting handle which engages directly with the base.

### Disclosure of the Invention

The present invention provides a rack tower according to claim 1 and configured to be mounted to a roof rail of a vehicle that may avoid the problems encountered with conventional towers. The invention is defined in the appended claims. The advantages of the present invention will be understood more readily after a consideration of the drawings and the Detailed Description of the Preferred Embodiments.

### Brief Description of the Drawings

Fig. 1 is partial view of a vehicle roof, showing a rack tower according to a first embodiment of the present invention attached to a roof rail.
Fig. 2 is a partially exploded isometric view of the embodiment of Fig. 1.
Fig. 3 is a partially broken-away perspective view of the embodiment of Fig. 1, with the tower cover closed and the locking pins in the extended position.
Fig. 4 is a partially broken-away perspective view of the embodiment of Fig. 1, with the tower cover open and the locking pins in the retracted position.
Fig. 5 is a side view of the embodiment of Fig 1, with the tower cover closed.
Fig. 6 is a front view of the embodiment of Fig. 1, with the tower cover closed and the locking pins engaged with the base.
Fig. 7 is a side view of the embodiment of Fig. 1, with the tower cover open.
Fig. 8 is a front view of the embodiment of Fig. 1, with the tower cover open and the locking pins disengaged from the base.

### Detailed Description of the Preferred Embodiments

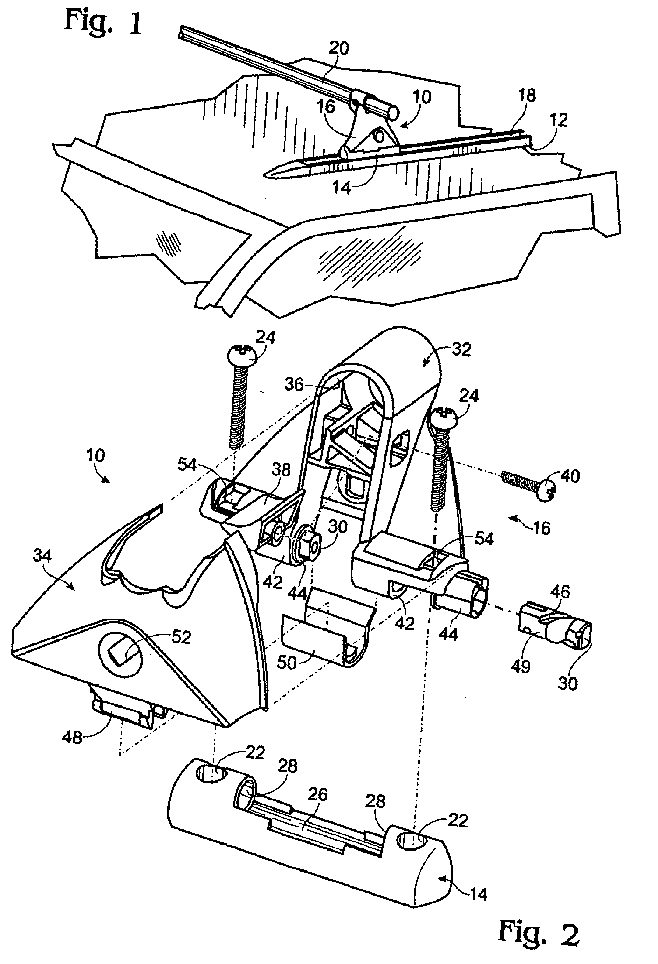

Fig. 1 shows, generally at 10, a rack tower according to a first embodiment of the present invention, coupled to a vehicle roof rail 12. Rack tower 10 includes a base 14 and a tower portion 16. Base 14 is configured to be mounted to one or more connectors disposed within a slot 18 formed in roof rail 12. Tower portion 16 is configured to be coupled to base 14, and also to retain a crossbar 20, to thus couple the crossbar to the vehicle.

Fig. 2 shows the construction of rack tower 10 in more detail. Base 14 includes one or more bolt holes 22 (two are shown) configured to accept bolts 24 to secure the base to the connectors disposed within slot 18 of roof rail 12. Base 14 also includes an inner surface 26 against which tower portion 16 may rest when coupled to base 14. Inner surface 26 is typically configured to have a shape complementary to the shape of the bottom surface of tower portion 16. In the depicted embodiment, inner surface 26 has a continuously curved shape that allows tower portion 16 to pivot relative to base 14, as described in more detail below. This allows one side of crossbar 20 to be lifted without damaging the roof rail to which the other side of the crossbar is attached, and also allows crossbar 20 to be more easily adapted for use on roofs of different profiles. However, it will be appreciated that inner surface 26 may have any other suitable shape without departing from the scope of the present invention.

Base 14 also includes a pair of recesses 28. Recesses 28 are configured to receive of a pair of complementary locking pins 30 that are movably coupled to tower portion 16. Locking pins 30 are movable between a retracted position, in which the locking pins do not extend into recesses 28, and an extended position, in which the locking pins do extend into the recesses. This allows tower portion 16 to be mounted to base 14 simply by resting the tower portion against inner surface 26 of base 14, and then moving locking pins 30 into recesses 28. Likewise, tower portion 16 may be removed from base 14 simply by moving locking pins 30 out of recesses 28, and then removing the tower portion from the base. The operation of locking pins 30 is described in more detail below.

Tower portion 16 includes a body 32 and a tower cover 34. Body 32 typically includes an aperture 36 configured to accommodate crossbar 20, and also may include a wedge 38 that is adjustable via bolt 40 to grip or clamp crossbar 20 within aperture 36.

Body 32 also includes a pair of generally cylindrical locking pin mounts 42. The depicted locking pin mounts 42 have a generally curved shape that is configured to be complementary to the shape of inner surface 26 of base 14 to facilitate the pivoting of tower portion 16 on the base. However, the locking pin mounts 42 may have any other suitable shape without departing from the scope of the present invention.

Locking pin mounts 42 are each configured to hold a locking pin sleeve 44 firmly in position relative to body 32. As shown in Fig. 2, one locking pin sleeve 44 is shown separate from body 32, while the other locking pin sleeve 44 is shown positioned within locking pin mount 42. Each locking pin sleeve 44 has a threaded inner surface that is complementary to threads 46 formed in each locking pin 30. The interaction of threads 46 on locking pins 30 with the threads on the inner surfaces of locking pin sleeves 44 causes locking pins 30 to move linearly along their axis of rotation 51 relative to locking pin sleeves 44 when the locking pins are rotated. Thus, locking pins 30 can be made to retract into or extend out of locking pin sleeves 4,4 by rotating the locking pins with respect to the locking pin sleeves.

The rotation of locking pins 30 may be accomplished by causing locking pins 30 to rotate with movements of tower cover 34. To accomplish this, tower cover 34 includes a downwardly extending locking pin bracket 48. Locking pin bracket 48 is configured to accommodate a flattened (or otherwise shaped) portion 49 at the end of each locking pin 30. Locking pin bracket 48 is also configured to allow locking pins 30 to slide linearly along the inner surfaces of the bracket, but not to rotate with respect to the bracket.

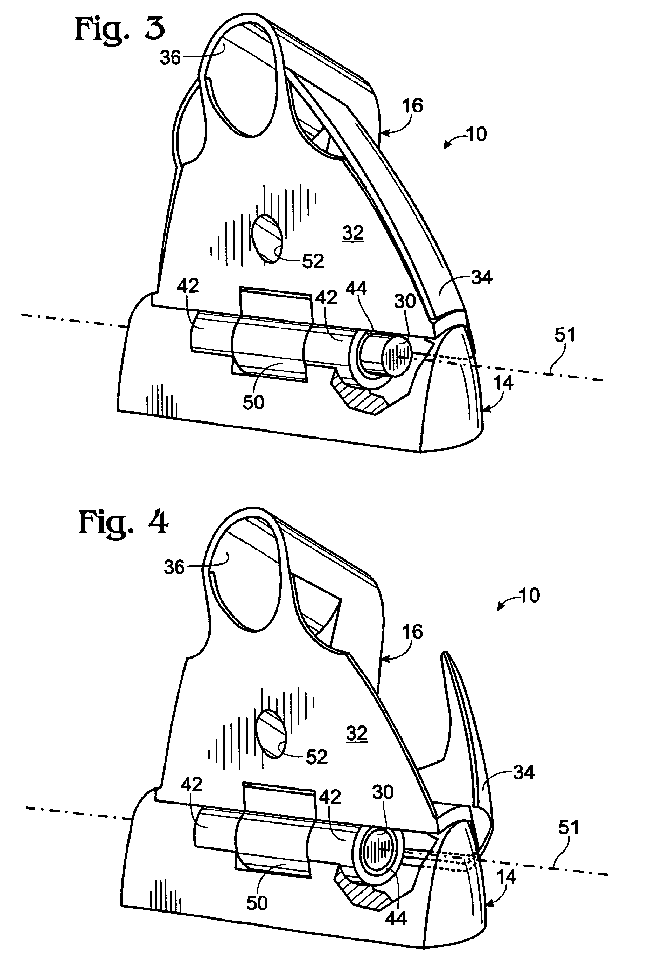

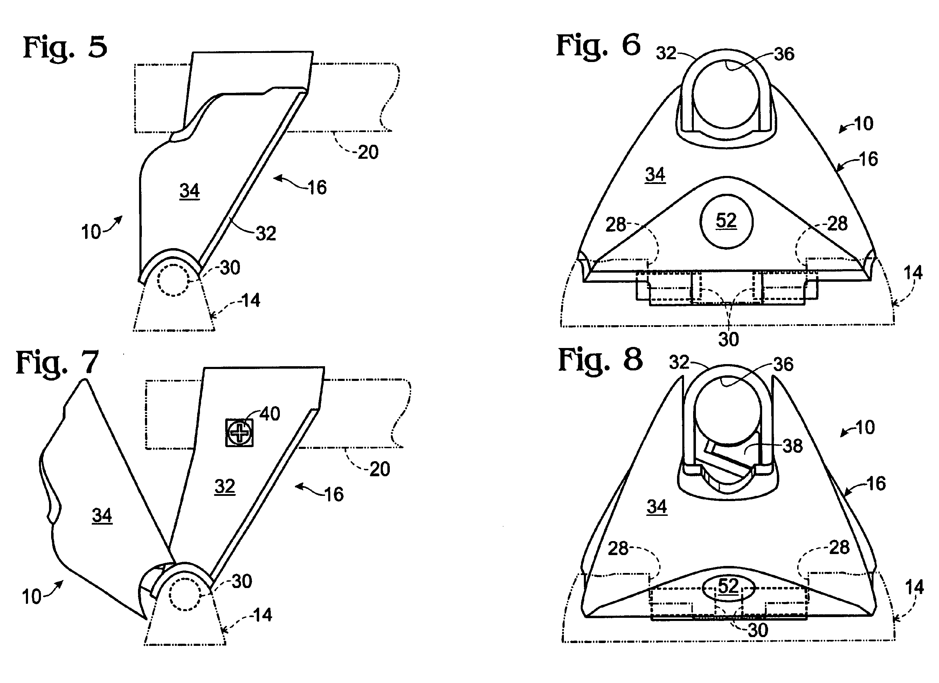

A bracket cover 50 configured to snap onto the bracket may be used to retain ends 49 of locking pins 30 within the bracket. Bracket cover 50 may include a lower surface complementary in shape to the inner surface 26 of base 14. This, combined with the ability of locking pins 30 to rotate within locking pin sleeves 44, allows tower cover 34 to be pivoted between an open position and a closed position with respect to body 32. Tower cover 34 pivots along an axis of rotation 51 that extends generally through both locking pins 30. The closed position is illustrated in Figs. 3, 5 and 6, and the open position is illustrated in Figs. 4, 7 and 8. The base is shown in phantom in Figs. 5-8, while the positions of locking pins 30 are indicated in dashed lines in these Figs.

The operation of rack tower 10 is illustrated in more detail in Figs. 3-8. Figs. 3-4 show operation of the rack tower from a perspective view, and Figs. 5-8 show the operation of the rack tower from side and front views. Initially, when tower cover 34 is in the closed position, locking pins 30 are in the extended position, and extend into recesses 28 in base 14. However, when tower cover 34 is pivoted away from body 32, bracket 48 causes locking pins 30 to rotate along with the tower cover 34. The threads within locking pin sleeves 44 then cause locking pins 30 to retract into the sleeves as the locking pins rotate. Locking pins 30 may retract completely into locking pin sleeves 44 when tower cover 34 is opened far enough, as shown in Fig. 4. This allows tower portion 16 to be easily removed from base 14. Likewise, tower portion 16 may be coupled to base 14 simply by placing the tower portion 16 upon inner surface 26 of base while tower cover 34 is in the open position, and then pivoting the tower cover to the closed position.

Besides providing for the quick attachment of tower portion 16 to base 14, the use of tower cover 34 also offers other advantages over conventional rack towers. For example, tower cover 34 covers much of the hardware used to mount and adjust rack tower 10 when in the closed position. Thus, mounting bolts 24 and wedge adjustment bolt 40 are protected from contamination by road dust and dirt when tower cover 34 is closed. This may keep the bolts operating smoothly for a longer period of time compared to unprotected bolts.

Furthermore, referring again to Fig. 2, tower cover 34 may include a lock mount 52 configured to accept the attachment of a locking mechanism (not shown). When installed on rack tower 10, the locking mechanism may be locked by a user to prevent others from opening tower cover 34. Because mounting bolts 24 and wedge adjustment bolt 40 are completely covered when tower cover 34 is closed, locking the locking mechanism prevents the mounting or adjustment bolts from being tampered with, and thus may help to prevent the theft of rack tower 10 or crossbar 20. It will be appreciated that mounting bolts 24 and wedge adjustment bolt 40 are all easily accessible by a user when tower cover 34 is in the open position (mounting bolts 24 are accessible through access holes 54 in body 32), without any need to remove tower portion 16 from base 14.

## Claims

1. A support device for securing a portion of a crossbar (20) on the top of a car comprising
base portion (14) having a mechanism for attaching the base portion (14) to a car, and
a tower portion (16) connected to the base portion (14), the tower portion (16) having a holding mechanism (36) for securing a portion of a crossbar (20), wherein the tower portion (16) is pivotal relative to the base portion (14) to accommodate varying roof configurations, **characterised in that** the tower portion (16) further comprises a cover member (34) that is moveable between open and closed positions, wherein movement of the cover member (34) causes locking engagement of the tower portion (16) in the base portion (14), the tower portion (16) having one or more locking pins (30) that extend in the direction of the pivotal axis when the cover member (34) moves from the open to the closed position.

2. The device of claim 1, wherein the base portion (14) has a fastening mechanism (38) for securing the base portion (14) to a rail on the top of a car.

3. The device of claim 1 or claim 2, wherein the cover member (34) pivots between the open and closed positions.

4. The device according to any preceding claim, wherein the fastening mechanism (3 8) is accessible when the cover member (34) is in the open position, and inaccessible when the cover member (34) is in the closed position.

5. The device according to any preceding claim, further comprising
a locking device connected to the tower portion (16) for permitting a user to lock the cover member (34) in the closed position.

6. The device according to any preceding claim, wherein the base portion (14) has one or more recesses, said one or more locking pins (30) capable of moving into engagement with the one or more recesses when the cover member (34) moves from the open position to the closed position.

7. The device of claim 6, wherein the cover member (34) pivots around an axis causing extension or retraction of the one or more locking pins (30) into or out of the recesses.

8. The device according to any preceding claim wherein the tower portion (16) further comprises a clamp device (38) configured for gripping the crossbar (20), and an adjustment mechanism (40) for tightening and loosening the clamp device (38) relative to the crossbar (20).

9. The device of any one of claims 1 to 7, wherein the holding mechanism (36) includes a clamp device (38) and an adjustment mechanism (40) for tightening and loosening the clamp device (38) relative to a crossbar (20).

10. The device of claim 8 or 9, wherein the adjustment mechanism (40) is accessible when the cover member (34) is open, and inaccessible when the cover member (34) is closed.

11. The device of any of claims 8-10, wherein the adjustment mechanism (40) is operable via a threaded member oriented generally perpendicular to the crossbar (20).

12. The device of any one of claims 8 to 10, wherein the adjustment mechanism (40) includes a threaded member impinging on a wedge member that contacts and clamps the crossbar (20) when the threaded member is screwed into a hole in the tower portion (16).

13. A rack system for carrying items on a car equipped with a pair of rails (12) on the top of the car, wherein the rack system comprises at least one pair of support devices as defined in any preceding claim, each said support device being configured for mounting one said support device on each rail (12) and securing a crossbar (20) between the support devices, the base portion of each said support device being configured for attachment to one of the rails (12).

14. The rack of claim 13, wherein the top of the car is a roof.

## Patentansprüche

1. Tragvorrichtung zum Befestigen eines Abschnitts einer Querstange (20) an der Oberseite eines Autos mit
einem Basisteil (14), das einen Mechanismus zum Befestigen des Basisteils (14) an einem Auto hat, und
einem Turmteil (16), das mit dem Basisteil (14) verbunden ist und einen Haltemechanismus (36) zum Befestigen eines Abschnitts einer Querstange (20) hat, wobei das Turmteil (16) in Bezug auf das Basisteil (14) schwenkbar ist, um eine Anpassung an verschiedene Dachausgestaltungen zu ermöglichen, **dadurch gekennzeichnet, dass** das Turmteil (16) ferner ein Abdeckelement (34) aufweist, das zwischen einer offenen und einer geschlossenen Position bewegbar ist, wobei eine Bewegung des Abdeckelements (34) einen verriegelnden Eingriff des Turmteils (16) in dem Basisteil (14) bewirkt, wobei das Turmteil (16) einen oder mehrere Verriegelungsstifte (30) aufweist, die in der Richtung der Schwenkachse verlaufen, wenn sich das Abdeckelement (34) von der offenen in die geschlossene Position bewegt.

2. Vorrichtung nach Anspruch 1, bei der das Basisteil (14) einen Befestigungsmechanismus (38) zum Befestigen des Basisteils (14) an einer Schiene an der Oberseite eines Autos hat.

3. Vorrichtung nach Anspruch 1 oder Anspruch 2, bei der das Abdeckelement (34) zwischen der offenen und der geschlossenen Position schwenkt.

4. Vorrichtung nach einem der vorhergehenden Ansprüche, bei der der Befestigungsmechanismus (38) zugänglich ist, wenn sich das Abdeckelement (34) in der offenen Position befindet, und unzugänglich ist, wenn sich das Abdeckelement (34) in der geschlossenen Position befindet.

5. Vorrichtung nach einem der vorhergehenden Ansprüche, die ferner eine mit dem Turmteil (16) verbundene Verriegelungsvorrichtung aufweist, um es einem Benutzer zu erlauben, das Abdeckelement (34) in der geschlossenen Position zu verriegeln.

6. Vorrichtung nach einem der vorhergehenden Ansprüche, bei der das Basisteil (14) eine oder mehrere Aussparungen aufweist, wobei der eine oder die mehreren Verriegelungsstifte (30) dazu in der Lage ist bzw. sind, sich in Eingriff mit dem einen oder den mehreren Aussparungen zu bewegen, wenn sich das Abdeckelement (34) von der offenen Position in die geschlossene Position bewegt.

7. Vorrichtung nach Anspruch 6, bei der das Abdeckelement (34) um eine Achse schwenkt, was ein Ausfahren oder ein Zurückziehen des einen oder der mehreren Verriegelungsstifte (30) in die oder aus den Aussparungen bewirkt.

8. Vorrichtung nach einem der vorhergehenden Ansprüche, bei der das Turmteil (16) ferner eine Klemmvorrichtung (38), die zum Greifen der Querstange (20) ausgestaltet ist, und einen Einstellmechanismus (40) zum Festziehen und Lösen der Klemmvorrichtung (38) in Bezug auf die Querstange (20) aufweist.

9. Vorrichtung nach einem der Ansprüche 1 bis 7, bei der der Haltemechanismus (36) eine Klemmvorrichtung (38) und einen Einstellmechanismus (40) zum Festziehen und Lösen der Klemmvorrichtung (38) in Bezug auf eine Querstange (20) enthält.

10. Vorrichtung nach Anspruch 8 oder 9, bei der der Einstellmechanismus (40) zugänglich ist, wenn das Abdeckelement (34) offen ist, und unzugänglich ist, wenn das Abdeckelement (34) geschlossen ist.

11. Vorrichtung nach einem der Ansprüche 8 bis 10, bei der der Einstellmechanismus (40) über ein mit einem Gewinde versehenes Element betätigt werden kann, das im Wesentlichen senkrecht zu der Querstange (20) ausgerichtet ist.

12. Vorrichtung nach einem der Ansprüche 8 bis 10, bei der der Einstellmechanismus (40) ein mit einem Gewinde versehenes Element enthält, das auf ein Keilelement trifft, das die Querstange (20) berührt und festklemmt, wenn das mit einem Gewinde versehene Element in eine Bohrung in dem Turmteil (16) geschraubt wird.

13. Trägersystem zum Tragen von Gegenständen an einem Auto, das mit einem Paar Schienen (12) an der Oberseite des Autos ausgestattet ist, wobei das Trägersystem zumindest ein Paar Tragvorrichtungen aufweist, wie sie in einem der vorhergehenden Ansprüche definiert sind, wobei jede dieser Tragvorrichtungen zum Befestigen einer dieser Tragvorrichtungen an jeder Schiene (12) und Befestigen einer Querstange (20) zwischen den Tragvorrichtungen ausgestaltet ist, wobei das Basisteil von jeder dieser Tragvorrichtungen zur Befestigung an einer der Schienen (12) ausgestaltet ist.

14. Träger nach Anspruch 13, bei dem die Oberseite des Autos ein Dach ist.

## Revendications

1. - Dispositif de support pour fixer une partie d'une traverse (20) sur la partie supérieure d'une voiture, comprenant :
- une partie de base (14) ayant un mécanisme pour attacher la partie de base (14) à une voiture ; et
- une partie de tour (16) connectée à la partie de base (14), la partie de tour (16) ayant un mécanisme de maintien (36) pour fixer une partie d'une traverse (20), la partie de tour (16) étant montée à pivotement par rapport à la partie de base (14) pour recevoir des configurations de toit variables, **caractérisé par le fait que** la partie de tour (16) comprend en outre un élément de couvercle (34) qui est apte à se déplacer entre des positions ouverte et fermée, le mouvement de l'élément de couvercle (34) provoquant un engagement de verrouillage de la partie de tour (16) dans la partie de base (14), la partie de tour (16) ayant une ou plusieurs broches de verrouillage (30) qui s'étendent dans la direction de l'axe de pivotement lorsque l'élément de couvercle (34) se déplace de la position ouverte à la position fermée.

2. - Dispositif selon la revendication 1, dans lequel la partie de base (14) a un mécanisme de fixation (38) pour fixer la partie de base (14) à un rail sur la partie supérieure d'une voiture.

3. - Dispositif selon l'une des revendications 1 ou 2, dans lequel l'élément de couvercle (34) pivote entre les positions ouverte et fermée.

4. - Dispositif selon l'une quelconque des revendications précédentes, dans lequel le mécanisme de fixation (38) est accessible lorsque l'élément de couvercle (34) est dans la position ouverte, et inaccessible lorsque l'élément de couvercle (34) est dans la position fermée.

5. - Dispositif selon l'une quelconque des revendications précédentes, comprenant en outre un dispositif de verrouillage connecté à la partie de tour (16) pour permettre à un utilisateur de verrouiller l'élément de couvercle (34) dans la position fermée.

6. - Dispositif selon l'une quelconque des revendications précédentes, dans lequel la partie de base (14) a une ou plusieurs cavités, ladite ou lesdites broches de verrouillage (30) étant capables de venir en engagement avec la ou les cavités lorsque l'élément de couvercle (34) se déplace de la position ouverte à la position fermée.

7. - Dispositif selon la revendication 6, dans lequel l'élément de carter (34) pivote autour d'un axe, provoquant l'extension ou la rétraction de la ou des broches de verrouillage (30) dans ou hors des cavités.

8. - Dispositif selon l'une quelconque des revendications précédentes, dans lequel la partie de tour (16) comprend en outre un dispositif de serrage (38) configuré pour serrer la traverse (20), et un mécanisme d'ajustement (40) pour resserrer et desserrer le dispositif de serrage (38) par rapport à la traverse (20).

9. - Dispositif selon l'une quelconque des revendications 1 à 7, dans lequel le mécanisme de maintien (36) comprend un dispositif de serrage (38) et un mécanisme d'ajustement (40) pour resserrer et desserrer le dispositif de serrage (38) par rapport à une traverse (20).

10. - Dispositif selon l'une des revendications 8 ou 9, dans lequel le mécanisme d'ajustement (40) est accessible lorsque l'élément de couvercle (34) est ouvert, et inaccessible lorsque l'élément de couvercle (34) est fermé.

11. - Dispositif selon l'une quelconque des revendications 8 à 10, dans lequel le mécanisme d'ajustement (40) est actionnable par l'intermédiaire d'un élément fileté orienté généralement perpendiculairement à la traverse (20).

12. - Dispositif selon l'une quelconque des revendications 8 à 10, dans lequel le mécanisme d'ajustement (40) comprend un élément fileté heurtant un élément de coin qui entre en contact et serre la traverse (20) lorsque l'élément fileté est vissé dans un trou dans la partie de tour (16).

13. - Système de crémaillère pour porter des articles sur une voiture équipée d'une paire de rails (12) sur la partie supérieure de la voiture, le système de crémaillère comprenant au moins une paire de dispositifs de support tels que définis à l'une quelconque des revendications précédentes, chaque dispositif de support précité étant configuré pour le montage dudit dispositif de support sur chaque rail (12) et la fixation d'une traverse (20) entre les dispositifs de support, la partie de base de chaque dispositif de support précité étant configurée pour la fixation à l'un des rails (12).

14. - Système de crémaillère selon la revendication 13, dans lequel la partie supérieure du car est un toit.
